# EUROPEAN PATENT APPLICATION

(11) **EP 4 693 915 A1**
(43) Date of publication of application: **11.02.2026**
(21) Application number: 23929220.4
(22) Date of filing: 29.03.2023
(51) Int. Cl.: H04B 1/7136

(54) **WIRELESS COMMUNICATION METHOD, NETWORK DEVICE, AND AMBIENT POWER ENABLED IOT (AMP) DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: RGTH
(86) International application number: PCT/CN2023/084595
(87) International publication number: WO 2024/197621

(57) **Abstract**

A wireless communication method, a network device, and an ambient power enabled IoT (AMP) device. The method comprises: a network device sending a main channel by means of frequency hopping, wherein a beacon frame is sent by means of the main channel, or the beacon frame is sent by means of a fixed channel, and the beacon frame is sent to an AMP device.

## Description

### TECHNICAL FIELD

Embodiments of the present application relate to the field of communications, and in particular, to a wireless communication method, a network device and an ambient power (AMP) device.

### BACKGROUND

In some scenarios, SIG is the most suitable operation frequency band for ambient power enabled IoT (AMP) devices. In some regions or countries such as China, the SIG frequency band, e.g., 920 MHz to 925MHz, is mandatory for frequency hopping, and the AMP devices are likely to work on this band.

In 802.11 systems, beacon frames are transmitted over a primary channel, where a channel bandwidth is 4 MHz in a 20 MHz band for 2.4 GHz and 5 GHz. For S1G, the minimum channel bandwidth of existing 802.11 systems such as 802.11ah is 1 MHz. However, in other regions or countries outside the United States, such as China, the minimum channel bandwidth is 250 kHz, and the frequency hopping is mandatory.

Due to the low complexity, low-power consumption, low cost and maintenance-free characteristics of the AMP devices, large-scale deployment is considered. When the AMP devices are deployed in the 802.11 systems, how to design the channel for beacon frames of the AMP devices to meet regional or national regulatory requirements is an urgent problem to be solved.

### SUMMARY

The present application provides a wireless communication method, a network device and an ambient power (AMP) device. The network device transmits a primary channel via frequency hopping, and a beacon frame is transmitted in the primary channel or in a fixed channel, thereby meeting frequency hopping requirements of some countries or regions for frequency bands.

In a first aspect, a wireless communication method is provided, including: transmitting, by a network device, a primary channel via frequency hopping, where a beacon frame is transmitted via the primary channel, or the beacon frame is transmitted via a fixed channel, the beacon frame being transmitted to an ambient power (AMP) device.

In a second aspect, a wireless communication method is provided, including: receiving, by an ambient power (AMP) device, a primary channel transmitted by a network device via frequency hopping, where a beacon frame transmitted to the AMP device is transmitted via the primary channel, or the beacon frame is transmitted via a fixed channel.

In a third aspect, a network device is provided, and is configured to perform the method in the above first aspect or its various implementations.

Specifically, the network device includes a functional module configured to perform the method in the above first aspect or its various implementations.

In a fourth aspect, an ambient power (AMP) device is provided, and is configured to perform the method in the above second aspect or its various implementations.

Specifically, the AMP device includes a functional module configured to perform the method in the above second aspect or its various implementations.

In a fifth aspect, a network device is provided, including a processor and a memory. The memory is configured to store a computer program, and the processor is used to call and run the computer program stored in the memory, to perform the method in the above first aspect or its various implementations.

In a sixth aspect, an ambient power (AMP) device is provided, including a processor and a memory. The memory is configured to store a computer program, and the processor is used to call and run the computer program stored in the memory, to perform the method in the above second aspect or its various implementations.

In a seventh aspect, a chip is provided, and is configured to implement the method in any one of the above first aspect to second aspect or various implementations thereof. Specifically, the chip includes a processor configured to call a computer program from a memory and run the computer program, to cause a device equipped with the apparatus to perform the method in any one of the above first aspect to second aspect or various implementations thereof.

In an eighth aspect, a computer readable storage medium is provided, and is configured to store a computer program. The computer program causes a computer to perform the method in any one of the above first aspect to second aspect or various implementations thereof.

In a ninth aspect, a computer program product is provided, including computer program instructions. The computer program instructions cause a computer to perform the method in any one of the above first aspect to second aspect or various implementations thereof.

In a tenth aspect, a computer program is provided. The computer program, when executed by a computer, causes the computer to perform the method in any one of the above first aspect to second aspect or various implementations thereof.

Based on the above technical solutions, the network device transmits the primary channel via frequency hopping, and the beacon frame is transmitted in the primary channel or in the fixed channel, thereby meeting the frequency hopping requirements of some countries or regions for frequency bands.

### BRIEF DESCRIPTION OF THE DRAWINGS

FIG. 1 is a schematic diagram of a communication system architecture provided in embodiments of the present application.
FIG. 2 is a schematic diagram of a zero-power consumption communication system according to an example of the present application.
FIG. 3 is a schematic diagram of power harvesting according to an embodiment of the present application.
FIG. 4 is a schematic diagram of back scattering communication according to an embodiment of the present application.
FIG. 5 is a circuit schematic diagram of resistive load modulation according to an embodiment of the present application
FIG. 6 is a schematic diagram of a wireless communication method provided according to embodiments of the present application.
FIG. 7 is a schematic diagram of a frequency hopping manner of a beacon frame provided in embodiments of the present application.
FIG. 8 is a schematic diagram of another frequency hopping manner of a beacon frame provided in embodiments of the present application.
FIG. 9 is a schematic diagram of a frequency hopping manner of a primary channel provided in embodiments of the present application.
FIG. 10 is a schematic diagram of a frequency hopping manner of a beacon frame provided in embodiments of the present application.
FIG. 11 is a schematic diagram of another frequency hopping manner of a beacon frame provided in embodiments of the present application.
FIG. 12 is a schematic diagram of a frequency hopping manner of a primary channel and a beacon frame provided in embodiments of the present application.
FIG. 13 is a schematic block diagram of a network device according to embodiments of the present application.
FIG. 14 is a schematic block diagram of an AMP device according to embodiments of the present application.
FIG. 15 is a schematic block diagram of a communication device according to embodiments of the present application.
FIG. 16 is a schematic block diagram of a chip according to embodiments of the present application.
FIG. 17 is a schematic block diagram of a communication system according to embodiments of the present application.

### DETAILED DESCRIPTION

Technical solutions in embodiments of the present application will be described below in conjunction with drawings of the embodiments of the present application. However, the described embodiments are some but not all of the embodiments of the present application. All other embodiments obtained by those ordinary skilled in the art based on the embodiments of the present application without creative efforts shall fall within the protection scope of the present application.

The technical solutions of the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a cellular internet of things system, a cellular passive internet of things system, or other communication systems.

Generally, conventional communication systems support a limited number of connections and are easy to implement. However, with the development of communication technologies, mobile communication systems support not only the conventional communication but also, for example, device to device (D2D) communication, machine to machine (M2M) communication, machine type communication (MTC), vehicle to vehicle (V2V) communication, or vehicle to everything (V2X) communication. The embodiments of the present application may also be applied to such communication systems.

Optionally, a communication system according to embodiments of the present application may be applied to a carrier aggregation (CA) scenario, a dual connectivity (DC) scenario, or a standalone (SA) network deployment scenario.

Optionally, the communication system in the embodiments of the present application may be applied to an unlicensed spectrum, where the unlicensed spectrum may also be considered as a shared spectrum; alternatively, the communication system in the embodiments of the present application may be applied to a licensed spectrum, where the licensed spectrum may also be considered as an unshared spectrum.

In the embodiments of the present application, various embodiments are described with respect to a network device and terminal devices. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user apparatus, or the like.

In the embodiments of the application, the network device may be a device used for communicating with a mobile device. The network device may be an access point (AP) in a WLAN, a base station such as a base transceiver station (BTS) in a GSM or a CDMA, a base station such as a NodeB (NB) in a WCDMA, an evolutional base station such as an evolutional Node B (eNB or eNodeB) in an LTE, a relay station or an access point, a vehicle-mounted device, a wearable device, a network device (gNB) in an NR network, a network device in a cellular internet of things, a network device in a cellular passive internet of things, a network device in a future ecolution of PLMN or a network device in an NTN, or the like.

By way of example but not limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station provided on land, water, and other positions.

In embodiments of the present application, the network device may provide a service for a cell, and the terminal device communicates with the network device through transmission resources (e.g., frequency domain resources, or frequency spectrum resources) used by the cell. The cell may be a cell corresponding to the network device (e.g., a base station), or belong to a macro base station or a base station corresponding to a small cell. Small cells here may include a metro cell, a micro cell, a pico cell, a femto cell, etc. These small cells have characteristics of small coverage and low transmit power, and are suitable for providing a data transmission service with high speed.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a next-generation communication system such as a terminal device in an NR network, a terminal device in a future evolution of a public land mobile network (PLMN), a terminal device in a cellular internet of things, a terminal device in a cellular passive internet of things, or the like.

In embodiments of the present application, the terminal device may be deployed on land, including indoor or outdoor environments, in forms such as handheld, wearable, or in-vehicle; or the terminal device may be deployed on water (e.g., a steamship); or the terminal device may be deployed in the air (e.g., an airplane, a balloon, or a satellite).

In embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in embodiments of the present application, the terminal device may also be a wearable device. The wearable device, which is also referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes, for example, a smartwatch or smart glasses, with full functions, large size, and entire or partial functions without relying on a smartphone, as well as, for example, a smart bracelet or smart jewelry for monitoring physical signs, which only focuses on a certain type of application function and needs to be used in conjunction with other devices (such as a smartphone).

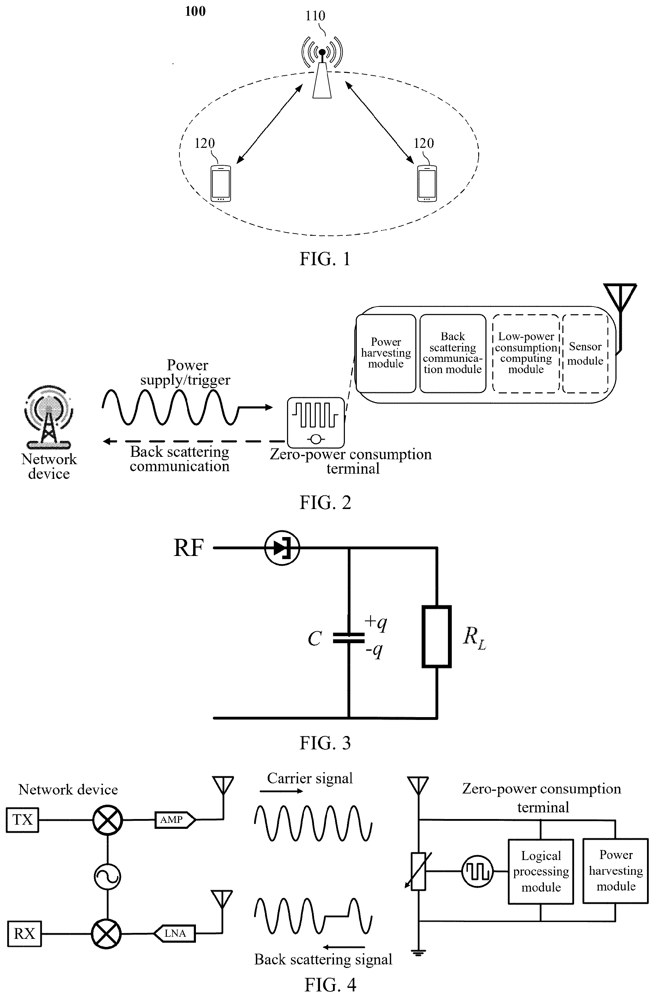

For example, a communication system 100 applied by the embodiments of the present application is shown in FIG. 1. The communication system 100 may include a network device 110, and the network device 110 may be a device that communicates with terminal devices 120 (also referred to as communication terminals or terminals). The network device 110 may provide communication coverage for a specific geographical area, and may communicate with terminal devices located within the coverage area.

FIG. 1 exemplarily shows one network device and two terminal devices. Optionally, the communication system 100 may include a plurality of network devices, and there may be another number of terminal devices within a coverage of each network device, which will not be limited in the embodiments of the present application.

Optionally, the communication system 100 may further include other network entities such as a network controller and a mobility management entity, which will not be limited in the embodiments of the present application.

It should be understood that, in the embodiments of the present application, a device with a communication function in a network/system may be referred to as a communication device. Considering the communication system 100 shown in FIG. 1 as an example, communication devices may include the network device 110 and the terminal devices 120 that have the communication function. The network device 110 and the terminal devices 120 may be the specific devices described above, which will not be repeated here. The communication devices may further include other devices in the communication system 100, such as a network controller, a mobility management entity, and other network entities, which will not be limited in the embodiments of the present application.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

It should be understood that "indication" mentioned in the embodiments of the present application may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B.

In the description of the embodiments of the present application, the term "corresponding" may mean that there is a direct correspondence or indirect correspondence between two, or an association between the two, or may mean a relationship of indicating and being indicated or a relationship of configuring and being configured, etc.

In the embodiments of the present application, "predefined" may be implemented by pre-saving corresponding codes, tables or other manners that may be used for indicating related information, in the device (for example, including the terminal device and the network device), and the present application does not limit its specific implementation. For example, being predefined may refer to being defined in a protocol.

In the embodiments of the present application, the "protocol" may refer to a standard protocol in the field of communications, which may include, for example, an LTE protocol, an NR protocol, and related protocols applied in a future communication system, which is not limited in the present application.

To facilitate the understanding of the technical solutions in the embodiments of the present application, the relevant technologies of the present application are explained.

### I. Zero-power consumption communication

Key technologies of the zero-power consumption communication include power harvesting, back scattering communication and a low-power consumption technology.

As shown in FIG. 2, a typical zero-power consumption communication system (e.g., a radio frequency identification (RFID) system) includes a network device (e.g., a reader/writer of the RFID system) and a zero-power consumption device (e.g., an electronic tag). The network device is used to transmit a wireless power supply signal and a downlink communication signal to the zero-power consumption device, and receive a back scattering signal from the zero-power consumption device. A basic zero-power consumption device includes a power harvesting module, a back scattering communication module and a low-power consumption computing module. In addition, the zero-power consumption device may further have a memory or a sensor, which is used for storing some basic information (such as an object identification) or sensor data (such as ambient temperature and ambient humidity).

For example, the power harvesting module may harvest power carried in radio waves in space (radio waves emitted by the network device as shown in FIG. 2), to drive the low-power consumption computing module of the zero-power consumption device and implement back scattering communication. After obtaining power, the zero-power consumption device may receive a control command from the network device, and transmit, based on a control signaling, data to the network device based on a back scattering method. The transmitted data may be data (e.g., an identity identification or pre-written information, such as production date, brand and manufacturer of a product) stored in the zero-power consumption device itself. The zero-power consumption device may also be loaded with various types of sensors, thereby reporting data harvested by the various types of sensors based on a zero-power consumption mechanism.

The key technologies of the zero-power consumption communication are described below.

### 1. Radio frequency power harvesting (RF Power Harvesting)

As shown in FIG. 3, a radio frequency power harvesting module harvests spacial electromagnetic wave energy based on an electromagnetic induction principle, to obtain power required for driving the zero-power consumption device to work, for example, driving a low-power consumption demodulation and modulation module, sensors, and memory reading, etc. Therefore, the zero-power consumption device does not need a conventional battery.

### 2. Back scattering communication

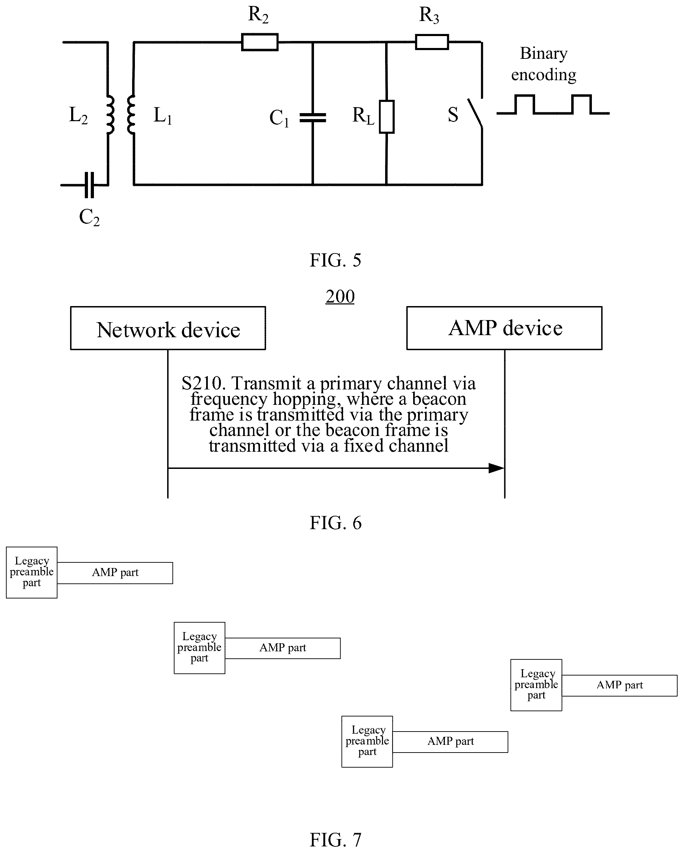

As shown in FIG. 4, the zero-power consumption device receives a carrier signal transmitted by the network device and modulates the carrier signal, loads information to be transmitted and radiates the modulated signal from antenna(s). This information transmission process is called back scattering communication. Back scattering and load modulation functions are inseparable. The load modulation changes a magnitude of an impedance and other parameters of the zero-power consumption device by adjusting and controlling a circuit parameter of an oscillation circuit of the zero-power consumption device based on the rhythm of a data stream, thereby completing the modulation process. The load modulation technology mainly includes two methods: resistive load modulation and capacitive load modulation. In the resistive load modulation, a resistor is connected in parallel with the load, and the resistor is turned on or off based on control of a binary data stream, as shown in FIG. 5. The on and off of the resistor will cause the change of the circuit voltage, thereby implementing amplitude keying modulation (amplitude shift keying (ASK)). That is, the modulation and transmission of the signal are implemented by adjusting the magnitude of the amplitude of the back scattering signal of the zero-power consumption device. Similarly, in the capacitive load modulation, the change of the resonant frequency of the circuit may be implemented by the on and off of a capacitor, thereby implementing frequency keying modulation (frequency shift keying (FSK)). That is, the modulation and transmission of the signal are implemented by adjusting the working frequency of the back scattering signal of the zero-power consumption device.

It can be seen that the zero-power consumption device performs information modulation on an incoming wave signal using the load modulation method, thereby implementing the back scattering communication process. Therefore, the zero-power consumption device has the following significant advantages.
(1) It does not actively transmit a signal, so it does not need a complex radio frequency link, such as a PA and a radio frequency filter.
(2) It does not need to actively generate a high-frequency signal, so it does not need a high-frequency crystal oscillator.
(3) By using the back scattering communication, the signal transmission of the terminal does not need to consume the power of the terminal.

### 3. Encoding technology

For the data transmitted by the zero-power consumption device, different forms of codes may be used to represent binary "1" and "0". The radio frequency identification system usually uses one of the following encoding methods: reverse non-return to zero (NRZ) encoding, Manchester encoding, unipolar return to zero encoding, differential bi-phase (DBP) encoding, differential encoding, pulse interval encoding (PIE), bi-phase space encoding (FM0), Miller encoding and differential encoding, etc. In simple terms, different encoding technologies use different pulse signals to represent 0 and 1.

In some scenarios, based on power sources and usage methods of zero-power consumption devices, the zero-power consumption devices may be divided into the following types.

### 1. Passive zero-power consumption device

The zero-power consumption device (such as the electronic tag in the RFID system) does not need a built-in battery. When the zero-power consumption device approaches the network device (such as the reader/writer in the RFID system), the zero-power consumption device is located within a near field range formed by antenna radiation of the network device. Therefore, the antenna of the zero-power consumption device generates an induced current due to electromagnetic induction, and the induced current drives a low-power consumption chip circuit of the zero-power consumption device. Demodulation of a forward link signal, modulation of a reverse link (or reflection link) signal, and other works are implemented. For the back scattering link, the zero-power consumption device transmits a signal by the back scattering implementation.

It can be seen that, the passive zero-power consumption device does not need a built-in battery to drive both the forward link and the reverse link, and is a true zero-power consumption device.

The passive zero-power consumption device does not need the battery, and the radio frequency circuit and the baseband circuit are very simple. For example, a low-noise amplifier (LNA), a power amplifier (PA), a crystal oscillator, analog-to-digital converters (ADC), and other devices are not required. Therefore, the passive zero-power consumption device has many advantages such as small size, low weight, very cheap price, and long service life.

The passive zero-power consumption terminal may also support other power harvesting methods. By harvesting energy from the environment (such as light energy, thermal energy, kinetic energy, and mechanical energy), power for driving circuits is obtained, and communications for terminal devices are supported.

### 2. Semi-passive zero-power consumption device

The semi-passive zero-power consumption device also is not equipped with a conventional battery itself, but may use an RF power harvesting module to harvest radio wave power or use power harvesting modules to harvest energy from the environment (such as solar energy, thermal energy, and mechanical vibration energy), and store the harvested power into a power storage unit (such as a capacitor). After obtaining the power, the power storage unit may drive a low-power consumption chip circuit of the zero-power consumption device. Demodulation of the forward link signal, modulation of the reverse link signal, and other works are implemented. For the back scattering link, the zero-power consumption device transmits a signal by the back scattering implementation. Alternatively, the zero-power consumption device may use a low-power consumption transmitter for active transmission communication based on the harvested power.

It can be seen that the semi-passive zero-power consumption device does not need a built-in battery to drive both the forward link and the reverse link. Although the power stored in the capacitor is used in the work, the power comes from the radio power harvested by the power harvesting module. Therefore, it is also a true zero-power consumption device.

The semi-passive zero-power consumption device inherits many advantages of the passive zero-power consumption device, so it has many advantages such as small size, low weight, very cheap price and long service life.

### 3. Active zero-power consumption device

The zero-power consumption device used in some scenarios may also be an active zero-power consumption device, which may have a built-in battery. The battery is used to drive a low-power consumption chip circuit of the zero-power consumption device. Demodulation of the forward link signal, modulation of the reverse link signal, and other works are implemented. However, for the back scattering link, the zero-power consumption device transmits a signal by the back scattering implementation. Therefore, the zero-power consumption of such a device is mainly reflected in the fact that the signal transmission of the reverse link does not need the power of the terminal, but uses the back scattering method.

For the active zero-power consumption terminal, the built-in battery supplies power to the RFID chip, to increase the reading and writing distance of the active zero-power consumption terminal and improve the reliability of communication. Therefore, the active zero-power consumption terminal may be applied in some scenarios with relatively high requirements on communication distance, reading latency, etc.

In some scenarios, the zero-power consumption devices may be divided into the following types based on types of transmitters.

### 1) Zero-power consumption devices based on back scattering

The zero-power consumption device of this type uses the above-mentioned back scattering method to transmit uplink data. The zero-power consumption device of this type does not have an active transmitter for active transmission, but only has a transmitter for back scattering. Therefore, when this type of zero-power consumption device transmits data, the network device is required to provide a carrier, and this type of zero-power consumption device performs back scattering based on the carrier to implement data transmission.

### 2) Zero-power consumption devices based on active transmitters

The zero-power consumption device of this type uses an active transmitter with active transmission capability for uplink data transmission. Therefore, when the zero-power consumption device of this type transmits data, it can use its own active transmitter to transmit data without the need for the network device to provide a carrier. Active transmitters suitable for zero-power consumption devices may be, for example, ultra-low-power consumption ASK transmitters, ultra-low-power consumption FSK transmitters, etc. In a case of transmitting a 100 µW signal, the overall power consumption may be reduced to 400 µW to 600 µW.

### 3) Zero-power consumption devices with both back scattering transmitters and active transmitters

The zero-power consumption device of this type can support both the back scattering transmitter and the active transmitter. The zero-power consumption device of this type may determine, based on different situations (e.g., electrical power conditions and available ambient energy sources) or the scheduling of network devices, which signal transmission method to use, that is, whether to use an active transmitter or a back scattering transmitter to transmit signals.

With the rapid development of the Internet of Things (IoT), existing IoT communication technologies can no longer meet the IoT communication requirements in many scenarios such as the following.

### 1. Harsh communication environment

Certain IoT scenarios may face extreme environments such as high temperature, extremely low temperature, high humidity, high pressure, high radiation or high-speed movement. For example, these IoT scenarios are ultra-high voltage substations, high-speed train track monitoring, environmental monitoring in high-cold zones, industrial production lines, etc. In these scenarios, existing IoT terminals cannot work due to the limitations of the working environments of conventional power supplies. In addition, extreme working environments are not conducive to IoT maintenance (e.g., battery replacement).

### 2. Demand for extremely small terminal form factors

Certain IoT communication scenarios (such as food traceability, commodity circulation, and smart wearables) require terminals to be extremely small in size to facilitate use in these scenarios. For example, IoT terminals used for commodity management in the circulation process usually take the form of electronic tags, which are embedded in the commodity packagings in a very small form. For another example, lightweight wearable devices may meet user requirements and improve user experience.

### 3. Extremely low-cost IoT communication requirements

Numerous IoT communication scenarios require that the cost of IoT terminals be low enough to enhance their competitiveness relative to other alternative technologies. For example, in logistics or warehousing scenarios, in order to facilitate the management of a large number of circulating items, an IoT terminal may be attached to each item, so that accurate management of the entire logistics process and cycle may be completed via communication between the terminal and the logistics network. These scenarios require that the prices of IoT terminals be sufficiently competitive.

Therefore, in order to cover these unmet IoT communication requirements, cellular networks also need to develop ultra-low-cost, extremely small-size, battery-free/maintenance-free IoT, and zero-power consumption IoT may just meet this need.

The zero-power consumption Internet of Things (IoT) may also be called the ambient power enabled IoT (abbreviated as Ambient IoT or AMP IoT). Zero-power consumption devices may also be called Ambient IoT devices or AMP IoT devices or AMP devices. Ambient IoT devices may refer to IoT devices that use various ambient power, such as radio frequency power, light energy, solar energy, thermal energy, mechanical energy, and other ambient power. This device may have no power storage capability, or may have very limited power storage capability, for example, use a capacitor with a capacity of tens of µF.

Ambient IoT may be used in at least four scenarios.
1. Object identification, such as logistics management, production line product management, and supply chain management.
2. Environmental monitoring, such as temperature, humidity and harmful gas monitoring of working environment and natural environment,
3. Positioning, such as indoor positioning, intelligent object search, production line item positioning.
4. Intelligent control, such as intelligent control of various electrical appliances in smart homes (turning on and off air conditioners, adjusting temperature), and intelligent control of various facilities in agricultural greenhouses (automatic irrigation and fertilization).

### II. Cellular passive internet of things

With the increase in 5G industry applications, types of connected objects and application scenarios are increasing, and there also will be higher requirements on cost and power consumption of communication terminals. Applications of battery-free, low-cost passive internet of things devices become key technologies of the cellular internet of things, which enriches the types and number of 5G network-linked terminals, and truly implements the Internet of Everything. The passive internet of things device may be extended on its basis based on zero-power consumption communication technologies such as the RFID technology, so as to be applicable to the cellular internet of things.

For AMP devices, S1G is the most suitable working frequency band. For example, due to the excellent coverage performance of the S1G frequency band, S1G (sub-1GHz) is the most suitable working frequency band for communication, and due to its higher transmit power, S1G is also the most suitable working frequency band for RF power harvesting. In some regions or countries such as China, the S1G frequency band, e.g., 920 MHz to 925MHz, is mandatory for frequency hopping, and the AMP devices are likely to work on this band.

In 802.11 systems, beacon frames are transmitted over a primary channel, where the channel bandwidth is 4 MHz in a 20 MHz band for 2.4 GHz and 5 GHz. For S1G, the minimum channel bandwidth of existing 802.11 systems such as 802.11ah is 1 MHz. However, in other regions or countries outside the United States, such as China, the minimum channel bandwidth is 250 kHz, and the frequency hopping is mandatory.

Due to the low complexity, low-power consumption, low cost and maintenance-free characteristics of the AMP devices, large-scale deployment is considered. When the AMP devices are deployed in the 802.11 systems, how to design a primary channel for transmitting beacon frames to meet regional or national regulatory requirements is an urgent problem to be solved.

To facilitate the understanding of the technical solutions in the embodiments of the present application, the technical solutions of the present application will be described in detail below through specific embodiments. The above related technologies, as optional solutions, may be arbitrarily combined with the technical solutions in the embodiments of the present application, which all fall within the protection scope of the embodiments of the present application. The embodiments of the present application include at least a part of the following contents.

FIG. 6 is a schematic diagram of a wireless communication method 200 according to embodiments of the present application. As shown in FIG. 6, the method 200 includes at least a part of the following contents.

In S210, a network device transmits a primary channel via frequency hopping. A beacon frame is transmitted via the primary channel, or the beacon frame is transmitted via a fixed channel. The beacon frame is transmitted to an ambient power (AMP) device.

Correspondingly, the AMP device receives the beacon frame via the primary channel, or receives the beacon frame via the fixed channel.

It should be understood that the embodiments of the present application may be applied to a Wi-Fi system (or a system supporting the 802.11 protocol, or an 802.11 system). The 802.11 protocol may include the existing 802.11 or may also include a new protocol in the future 802.11 family.

In some embodiments, the network device may be an AP in the Wi-Fi system, which is not limited in the present application.

In the embodiments of the present application, the AMP device is also called an ambient power IoT device (AMP IoT device or Ambient IoT device), a zero-power consumption device, or a zero-power consumption terminal.

In some embodiments, the AMP device may be a type of devices defined based on characteristics such as device complexity, power consumption, power source, communication method, waveform used.

For example, the AMP device may be a device that performs communication based on ambient power. For example, the AMP device uses ambient power such as radio frequency power, light energy, solar energy, thermal energy, and mechanical energy to obtain power for communication.

For another example, the AMP device may be a type of device with low complexity or using a new waveform, for example, using a low-order modulation method or a simple waveform or a signal with a smaller bandwidth for communication.

For another example, the AMP device may be a type of device using a back scattering communication manner.

In some embodiments, the AMP device may also support active transmission communication manner.

In some embodiments, a total number of channels in a communication system (e.g., an 802.11 system) is K, and the primary channel includes one or more channels among the K channels. For example, the primary channel is a first channel (denoted as channel 0) among the K channels. K is a positive integer.

In some embodiments, a frequency band where the K channels are located belongs to the S1G frequency band.

Therefore, the network device transmits the primary channel for carrying the beacon frame via frequency hopping, or transmits the primary channel via frequency hopping and transmits the beacon frame via the fixed channel, to meet the regulatory requirements in some regions or countries (such as China).

The specific implementation of the channel for carrying the beacon frame is described below in conjunction with a specific embodiment.

### Embodiment 1

In this Embodiment 1, the beacon frame is transmitted via the primary channel.

In some embodiments, the primary channel performs frequency hopping based on a first frequency hopping pattern.

In some embodiments, the first frequency hopping pattern is predefined. Alternatively, the network device may configure the first frequency hopping pattern for the AMP device, for example, dynamically configure or semi-statically configure the first frequency hopping pattern. That is, the network device and the AMP device have the same understanding of the frequency hopping pattern of the primary channel.

It should be understood that in the embodiments of the present application, the primary channel may perform frequency hopping in units of channels, or the primary channel may perform frequency hopping in units of other frequency domain units, which will not be limited in the present application.

In some embodiments of the present application, the first frequency hopping pattern is used to indicate N channel indexes, where N is a frequency hopping period, and the N channel indexes are used to indicate channels to which the primary channel sequentially hops within one frequency hopping period.

Optionally, the unit of the frequency hopping period may be a slot, or may be other time units, which will not be limited in the present application.

As a specific example, the frequency hopping period may be N slots.

In some embodiments, the primary channel may perform frequency hopping among all channels (i.e., the K channels) supported by the communication system.

In this case, a value range of the N channel indexes depends on values of channel indexes of the K channels.

In a specific embodiment, the K channels are 20 channels, and the channel indexes are 0 to 19 respectively. The primary channel performs frequency hopping in the 20 channels, and the value range of the N channel indexes may be from 0 to 19.

As an example, N is equal to 4 (N = 4), and the first frequency hopping pattern indicates [0, 6, 12, 15]. Therefore, within one frequency hopping period, the primary channel sequentially performs frequency hopping in an order of channel 0, channel 6, channel 12, and channel 15.

In some other embodiments, the primary channel may also perform frequency hopping in a subset of all channels (i.e., the K channels) supported by the communication system. In this way, it is conducive to reducing the complexity of the AMP device receiving the beacon frame. In this case, the value range of the N channel indexes depends on values of channel indexes corresponding to channels in the subset.

In a specific embodiment, the K channels are 20 channels, and the channel indexes are 0 to 19 respectively. The primary channel performs frequency hopping in a subset {0, 4, 8, 12, 16} of the 20 channels, that is, performs frequency hopping on one channel among 4 consecutive channels. The value range of the N channel indexes is {0, 4, 8, 12, 16}.

As an example, N = 4, and the first frequency hopping pattern indicates [0, 4, 8, 12]. Therefore, within one frequency hopping period, the primary channel sequentially performs frequency hopping in an order of channel 0, channel 4, channel 8, and channel 12.

In some other embodiments of the present application, the first frequency hopping pattern may be used to indicate N frequency hopping offsets, a frequency hopping offset may indicate a number of channels by which a target channel of a single frequency hopping is offset relative to a starting channel, and N is a frequency hopping period. The frequency hopping offset may be a positive value or a negative value, where a positive value indicates frequency hopping to a channel with a larger index, and a negative value indicates frequency hopping to a channel with a smaller index.

In a specific embodiment, the K channels are 20 channels, the channel indexes are 0 to 19 respectively, N = 4, and the first frequency hopping pattern indicates [0, 2, 3, -4]. Therefore, within one frequency hopping period, the primary channel sequentially performs frequency hopping in an order of channel 0, channel 2 (a frequency hopping offset between channel 2 and channel 0 is 2), channel 5 (a frequency hopping offset between channel 5 and channel 3 is 3), and channel 1 (a frequency hopping offset between channel 1 and channel 5 is -4).

It should be understood that in the embodiments of the present application, two neighboring frequency hoppings in the first frequency hopping pattern may have the same frequency hopping offset and the same frequency hopping direction, or may have different frequency hopping offsets and different frequency hopping directions, which will not be limited in the present application.

For example, within one frequency hopping period, the first frequency hopping is from channel 0 to channel 3, and the frequency hopping offset is 3 channels; and the frequency hopping offset of the second frequency hopping may be 3 channels, or may be another number of channels. The frequency hopping direction of the second frequency hopping may be the same as or different from the frequency hopping direction of the first frequency hopping. For example, the second frequency hopping may be from channel 3 to channel 6 or other channels (e.g., channel 4 or channel 5); or the second frequency hopping may be from channel 3 to channel 0, channel 1, or channel 2.

In some embodiments, in each frequency hopping period, a frequency hopping pattern of the primary channel may be the same. For example, the first frequency hopping pattern is predefined or semi-statically configured. Alternatively, in each frequency hopping period, the frequency hopping pattern of the primary channel may be variable. For example, the first frequency hopping pattern is dynamically configured.

In some embodiments, a duration of the frequency hopping period needs to meet a preset rule, for example, it needs to be less than or equal to a first duration threshold, and the first duration threshold is determined based on the preset rule. For example, the first duration may be t seconds (for example, t = 2) stipulated in some countries or regions, thereby meeting the frequency hopping requirements of some countries or regions that dwell time on a channel needs to be less than t seconds. For example, the frequency hopping period is N slots, and the duration of the N slots needs to be less than or equal to t seconds.

In some embodiments, the first frequency hopping pattern is generated based on a pseudo-noise (PN) sequence.

Optionally, multiple frequency hopping patterns may be generated based on the PN sequence for different frequency hopping periods.

In some embodiments, other channels except the primary channel are also transmitted via frequency hopping.

That is, the primary channel and other channels are all transmitted via frequency hopping.

In some embodiments, the other channels and the primary channel use the same frequency hopping pattern.

In some other embodiments, frequency hopping patterns used by the other channels and the primary channel have a first frequency hopping offset, and a unit of the first frequency hopping offset is a channel.

For example, if the frequency hopping pattern of the primary channel is [Δ₁, Δ₂, ..., Δ_{N}], the frequency hopping pattern of channel k may be [(Δ₁+*µₖ*)mod K, (Δ₂+*µₖ*)mod K, ..., (Δ_{N}+*µₖ*)mod K], where Δᵢ is used to indicate a channel index of the frequency hopping, i = 1, 2, ..., N, a value range of Δᵢ is the channel indexes of K channels, and *µₖ* indicates a frequency hopping offset corresponding to channel k.

Optionally, frequency hopping offsets of the frequency hopping patterns of different channels relative to the frequency hopping pattern of the primary channel may be the same or may be different, which will not be limited in the present application.

Optionally, other channels except the primary channel may not be transmitted via frequency hopping. That is, only the primary channel is transmitted via frequency hopping.

Next, indication manners of primary channel related information will be described in conjunction with specific embodiments.

In some embodiments, the primary channel related information may include at least one of:
an initial position (or a starting position, e.g., an initial frequency point) of the primary channel, or frequency hopping information (e.g., a frequency hopping pattern) of the primary channel.

Manner 1: the primary channel related information is indicated by frames.

In some embodiments of the present application, the method 200 further includes:
the network device indicating the primary channel related information via a first frame, where the first frame includes but is not limited to at least one of the following frames: a beacon frame, an association response frame, a reassociation response frame, or a probe response frame.

In some embodiments, in a case where the beacon frame is received, the AMP device may determine that the channel where the beacon frame is located is the primary channel.

In some embodiments, in a case where a non-beacon frame such as the association response frame, the reassociation response frame or the probe response frame is received, the association response frame, the reassociation response frame or the probe response frame may indicate the position of the primary channel, e.g, the initial frequency point of the primary channel.

In some embodiments, the first frame includes first indication information, and the first indication information is used to indicate the primary channel related information , e.g., the initial frequency point of the primary channel and/or the frequency hopping pattern of the primary channel.

For example, the beacon frame may carry the first indication information, and the first indication information may indicate the frequency hopping pattern of the primary channel.

For another example, the association response frame, the reassociation response frame, or the probe response frame may carry the first indication information, and the first indication information may be used to indicate the initial frequency point of the primary channel and the frequency hopping pattern of the primary channel.

Optionally, in a case where the frequency hopping pattern of the primary channel is a predefined frequency hopping pattern, the first frame may not indicate the frequency hopping pattern of the primary channel.

In some embodiments, the first frame may further indicate a frequency point of a channel where the first frame is located.

Manner 2: the primary channel related information is indicated by an indication channel.

In some embodiments of the present application, the method 200 further includes:
the network device indicating, via a first channel, the primary channel related information, e.g., frequency hopping information of the primary channel.

In this case, the first signal may be considered as an indication channel.

In some embodiments, the network device and the AMP device have the same understanding of a position of the indication channel, so that the AMP device may obtain the primary channel related information from the indication channel.

In some embodiments, the first channel is a fixed channel (or a static channel), for example, a channel with an index of x. Optionally, x is predefined, or is configured by the network device.

In some other embodiments, the first channel is transmitted via frequency hopping.

In some embodiments, an initial frequency point of the first channel may be predefined, or may be configured by the network device.

In some embodiments, a frequency hopping pattern of the first channel is predefined, or is configured by the network device.

That is, in the embodiments of the present application, the AMP device and the network device have the same understanding of a position of the first channel at different times, so the AMP device may obtain the primary channel related information from the first channel.

In some embodiments, the frequency hopping patterns of the first channel and the primary channel are the same, or may be different, which will not be limited in the present application.

In some embodiments, the first channel is used to indicate the frequency hopping pattern of the primary channel and/or the initial frequency point of the primary channel.

In some embodiments, the first channel is used to indicate a frequency hopping offset between the frequency hopping pattern of the primary channel and the frequency hopping pattern of the first channel, and/or the initial frequency point of the primary channel. Optionally, a unit of the frequency hopping offset may be a channel.

For example, if the frequency hopping pattern of the first channel is [O₁, O₂, ..., O_{N}], the frequency hopping pattern of the primary channel may be [(O₁+*offset*)mod K, (Δ₂+*offset*)mod K, ..., (Δ_{N}+*offset*)mod K], where Oᵢ is used to indicate a channel index of the frequency hopping, i = 1, 2, ..., N, a value range of Oᵢ may be the channel indexes of K channels, and *offset* indicates the frequency hopping offset between the frequency hopping pattern of the primary channel and the frequency hopping pattern of the first channel.

In some embodiments, in a case where the first channel is transmitted via frequency hopping, the first channel only hops to another channel for a short period of time (e.g., Δt), which is equivalent to the AMP device always being able to obtain the primary channel related information in a static channel.

Optionally, in a case where the first channel does not indicate the initial frequency point of the primary channel, the initial frequency point of the primary channel may be obtained via the first frame.

In some embodiments, the beacon frame includes a legacy preamble part and an AMP part, the AMP part may be received by an AMP device, and the legacy preamble part may be received by a non-AMP device. Optionally, the legacy preamble part may be used by the non-AMP device to identify that a channel is being occupied, or may be used by the non-AMP device to determine that the beacon frame is transmitted to the AMP device.

In some embodiments, the AMP part may carry some necessary information used for the AMP device to access the channel or receive subsequent frames.

In some embodiments, a bandwidth of the legacy preamble part and a bandwidth of the AMP part need to meet the preset rule, e.g., bandwidth requirements of some countries or regions.

For example, the bandwidth of the legacy preamble part is not less than 1 MHz; and the bandwidth of the AMP part is an integer multiple of 250 MHz, such as 250 MHz.

In some embodiments, the non-AMP device may be an existing device in the communication system, also referred to as a legacy device. For example, the non-AMP device may include a STA in a Wi-Fi system.

In some embodiments, both the legacy preamble part and the AMP part are transmitted via frequency hopping.

FIG. 7 is a schematic diagram showing a frequency hopping transmission of a legacy preamble part and an AMP part together.

In some other embodiments, the AMP part is transmitted via frequency hopping.

For example, a frequency hopping range of the AMP part does not exceed the bandwidth of the legacy preamble part.

For an AMP device, a channel carrying the AMP part may be considered as a primary channel corresponding to the AMP device. In a case where the AMP part is transmitted via frequency hopping, it is equivalent to that the primary channel of the AMP device is also transmitted via frequency hopping.

In a specific embodiment, the bandwidth of the legacy preamble part is 1 MHz, and the bandwidth of the AMP part is 250 KHz. The AMP part may perform frequency hopping transmission within the 1 MHz bandwidth. For example, the 1 MHz is divided into 4 frequency bands: 0 KHz to 250 KHz, 250 KHz to 500 KHz, 500 KHz to 750 KHz, and 750 KHz to 1 MHz, whose indexes are frequency bands 0 to 3 respectively. The frequency hopping pattern may be [frequency band 0, frequency band 1, frequency band 2, frequency band 3], or [frequency band 0, frequency band 2, frequency band 1, frequency band 3].

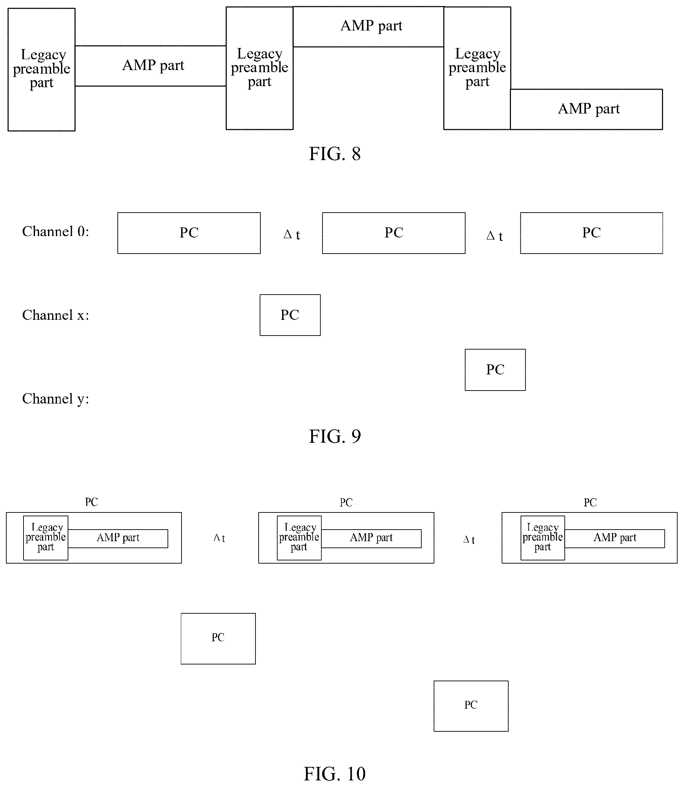

FIG. 8 is a schematic diagram showing a frequency hopping transmission of an AMP part within a bandwidth of a legacy preamble part.

Embodiment 2: Primary channel frequency hopping transmission. The beacon frame is transmitted via the primary channel, and the beacon frame is transmitted on the semi-static channel.

The difference from Embodiment 1 is that the beacon frame is transmitted on a semi-static channel, while in Embodiment 1, the beacon frame is transmitted on a dynamic channel. Therefore, the transmission of the beacon frame based on the Embodiment 2 may meet the frequency hopping requirements of some countries or regions, and reduce the complexity of the AMP device receiving the beacon frame.

In some embodiments, the primary channel performs frequency hopping in a first channel set, and the beacon frame is transmitted on a fixed channel in the first channel set.

Optionally, the first channel set includes all of the K channels, or may include a part of the K channels.

In some embodiments, the beacon frame may be transmitted on a channel with a lowest channel index in the first channel set, such as channel 0, or the beacon frame may be transmitted on a channel determined based on other preset rules, which will not be limited in the present application.

In some embodiments, on other channels in the first channel set except the fixed channel, the network device remains silent or transmits other frames except the beacon frame.

In some embodiments, dwell time of the primary channel on the fixed channel is less than a second time threshold. That is, the primary channel hops to another channel in the first channel set within a second time interval. Optionally, the second duration threshold may be determined based on the preset rule. For example, the second duration threshold may be t seconds (e.g., t = 2) stipulated by some countries or regions, thereby meeting the frequency hopping requirements of some countries or regions that dwell time on a channel needs to be less than t seconds.

In some embodiments, assuming that dwell time of the network device on another channel except the fixed channel is Δt, a duty cycle based on Δt and dwell time of the network device on the fixed channel needs to meet the preset rule.

In some embodiments, time in which the network device is in an active period needs to be less than a duration specified by the preset rule, such as z seconds; and the beacon frame can be transmitted during the active period. Optionally, the transmission of the beacon frame is not allowed within a certain time window when the primary channel hops to another channel except the fixed channel.

FIG. 9 is a schematic diagram showing a frequency hopping manner of a primary channel provided in embodiments of the present application. As shown in FIG. 9, the primary channel may be transmitted via frequency hopping on channel 0, channel x, and channel y, and the beacon frame may be transmitted on the fixed channel (e.g., channel 0). In a case where the primary channel hops to channel x and channel y, the network device remains silent or may transmit other frames except the beacon frame.

It should be understood that in the Embodiment 2, the primary channel may also performs frequency hopping transmission using the first frequency hopping pattern. As for specific implementation, reference is made to the relevant description of the Embodiment 1, which will not be repeated here for brevity.

It should also be understood that in the Embodiment 2, the Manner 1 and the Manner 2 described in the Embodiment 1 may also be used to indicate the primary channel related information. As for the specific implementation, reference is made to the relevant description of the Embodiment 1, which will not be repeated here for brevity.

In the Embodiment 2, the beacon frame may be transmitted in a similar manner to that in Embodiment 1.

In some implementations, both the legacy preamble part and the AMP part in the beacon frame are transmitted via frequency hopping, as shown in FIG. 10.

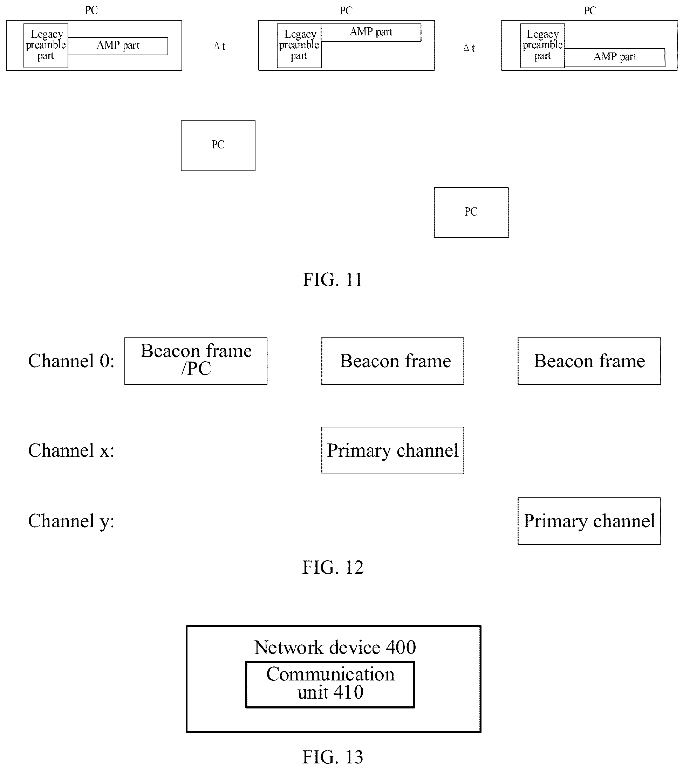

In some other implementations, the AMP part of the beacon frame is transmitted via frequency hopping on the fixed channel. For example, the frequency hopping range of the AMP part does not exceed the bandwidth of the legacy preamble part, as shown in FIG. 11.

It should be understood that in the Embodiment 2, in a case where the beacon frame is transmitted in the primary channel and the primary channel is transmitted via frequency hopping, it can be considered that the beacon frame is also transmitted via frequency hopping. In a case where the beacon frame is transmitted via frequency hopping, in some cases, a relative position relationship between the legacy preamble part and the AMP part in the beacon frame is fixed, as shown in FIGS. 7 and 10; since the legacy preamble part and the AMP part perform frequency hopping together, the relative position between the legacy preamble part and the AMP part does not change. In some other cases, the relative position between the legacy preamble part and the AMP part in the beacon frame is variable, as shown in FIGS. 8 and 11; and the AMP part performs frequency hopping within the bandwidth of the legacy preamble part.

Embodiment 3: the primary channel is transmitted via frequency hopping, and the beacon frame is transmitted on a fixed channel.

In other words, in the Embodiment 3, the primary channel is transmitted via frequency hopping, and the beacon frame is transmitted on a static channel. Therefore, the transmission of the beacon frame based on the Embodiment 3 may meet the frequency hopping requirements of some countries or regions, and may reduce the complexity of the AMP device receiving the beacon frame.

Optionally, the fixed channel may be the primary channel, or may not be the primary channel.

For example, the beacon frame is fixedly transmitted on channel 0, or may be fixedly transmitted on another channel.

FIG. 12 is a schematic diagram showing a transmission manner of a primary channel and a beacon frame. The primary channel is transmitted via frequency hopping; and the beacon frame is transmitted on a fixed channel, e.g., transmitted via channel 0. The primary channel is transmitted via frequency hopping on channel 0, channel x, and channel y.

It should be understood that in the Embodiment 3, the primary channel may use the transmission manner in the Embodiment 1, which will not be repeated here for brevity..

It should be understood that in the Embodiment 3, the primary channel related information may be indicated using the manner in the Embodiment 1, which will not be repeated here for brevity.

It should be understood that in the Embodiment 3, the beacon frame includes a legacy preamble part and an AMP part, the AMP part may be received by an AMP device, and the legacy preamble part may be received by a non-AMP device.

In some embodiments, the legacy preamble part is not transmitted via frequency hopping, and the AMP part is not transmitted via frequency hopping.

In some embodiments, the AMP part is transmitted via frequency hopping, and the legacy preamble part is not transmitted via frequency hopping.

For example, a frequency hopping range of the AMP part does not exceed a bandwidth of the legacy preamble part, as shown in FIG. 8.

In summary, in the embodiments of the present application, the network device transmits the primary channel via frequency hopping, where the beacon frame is transmitted via the primary channel or the beacon frame is transmitted via a fixed channel, thereby meeting the frequency hopping requirements for frequency bands in some countries or regions.

In some implementations, the primary channel is transmitted via a specific frequency hopping pattern, and the beacon frame is transmitted via the primary channel.

In some implementations, the primary channel is transmitted via a specific frequency hopping pattern, and the beacon frame is transmitted on a fixed channel in a frequency hopping pattern of the primary channel.

In some other implementations, the primary channel is transmitted in a specific pattern, and the beacon frame is transmitted on a fixed channel.

In some designs, in order to coexist with existing systems, the beacon frame may include a legacy preamble part and an AMP part. The legacy preamble part may be used by a non-AMP device to identify that a channel is being occupied, or to determine that the beacon frame is a beacon frame transmitted to an AMP device.

In some designs, both the legacy preamble part and the AMP part are transmitted via frequency hopping. Alternatively, only the AMP part is transmitted via frequency hopping, for example, transmitted via frequency hopping within a bandwidth of the legacy preamble part.

The method embodiments of the present application are described in detail above with reference to FIG. 6 to FIG. 12. Apparatus embodiments of the present application will be described in detail below with reference to FIG. 13 to FIG. 17. It should be understood that the apparatus embodiments and the method embodiments correspond to each other, and as for similar descriptions of the apparatus embodiments, reference can be made to the method embodiments.

FIG. 13 shows a schematic block diagram of a network device 400 according to embodiments of the present application. As shown in FIG. 13, the network device 400 includes:
a communication unit 410, configured to transmit a primary channel via frequency hopping, where a beacon frame is transmitted via the primary channel, or the beacon frame is transmitted via a fixed channel, the beacon frame being transmitted to an ambient power (AMP) device.

In some embodiments, the primary channel performs frequency hopping based on a first frequency hopping pattern.

In some embodiments, the first frequency hopping pattern is predefined.

In some embodiments, the first frequency hopping pattern is used to indicate N channel indexes, where N is a frequency hopping period, and the N channel indexes are used to indicate channels that are sequentially hopped within one frequency hopping period.

In some embodiments, in each frequency hopping period, a frequency hopping pattern of the primary channel is the same, or a frequency hopping pattern of the primary channel is variable.

In some embodiments, the first frequency hopping pattern is generated based on a pseudo-noise (PN) sequence.

In some embodiments, other channels except the primary channel are transmitted via frequency hopping.

In some embodiments, the other channels and the primary channel use a same frequency hopping pattern.

In some embodiments, frequency hopping patterns used by the other channels and the primary channel have a first frequency hopping offset, and a unit of the first frequency hopping offset is a channel.

In some embodiments, the primary channel performs frequency hopping within a first channel set, and the beacon frame is transmitted on a fixed channel in the first channel set, the first channel set including all or part of all channels.

In some embodiments, on other channels in the first channel set except the fixed channel, the network device remains silent or transmits other frames except the beacon frame.

In some embodiments, the communication unit 410 is further configured to:
indicate frequency hopping information of the primary channel via a first frame, where the first frame includes at least one of the following frames: a beacon frame, an association response frame, a reassociation response frame, or a probe response frame.

In some embodiments, the first frame includes first indication information, and the first indication information is used to indicate an initial frequency point of the primary channel and/or a frequency hopping pattern of the primary channel.

In some embodiments, the first frame is further used to indicate a frequency point of a channel where the first frame is located.

In some embodiments, the communication unit 410 is further configured to:
indicate frequency hopping information of the primary channel via a first channel.

In some embodiments, the first channel is a fixed channel, or the first channel is transmitted via frequency hopping.

In some embodiments, the first channel is used to indicate a frequency hopping pattern of the primary channel or a frequency hopping offset between the frequency hopping pattern of the primary channel and a frequency hopping pattern of the first channel.

In some embodiments, the primary channel performs frequency hopping within a first channel set, and the first channel set includes part of all channels.

In some embodiments, the beacon frame includes a legacy preamble part and an AMP part, a target receiving device of the AMP part is an AMP device, and a target receiving device of the legacy preamble part is a non-AMP device.

In some embodiments, the legacy preamble part and the AMP part are both transmitted via frequency hopping.

In some embodiments, the AMP part is transmitted via frequency hopping.

In some embodiments, a frequency hopping range of the AMP part does not exceed a bandwidth of the legacy preamble part.

Optionally, in some embodiments, the communication unit mentioned above may be a communication interface or a transceiver, or may be an input/output interface of a communication chip or a system on chip. The processing unit mentioned above may be one or more processors.

It should be understood that the network device 400 according to the embodiments of the present application may correspond to the network device in the method embodiments of the present application. Other operations and/or functions of each unit in the network device 400 as mentioned above are respectively to implement corresponding processes of the network device in the methods shown in FIG. 6 to FIG. 12, which will not be repeated here for the sake of brevity.

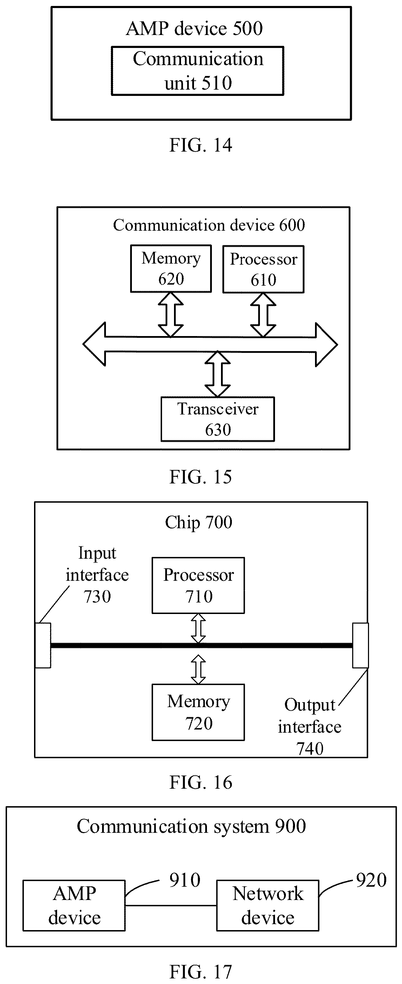

FIG. 14 shows a schematic block diagram of an ambient power (AMP) device 500 according to embodiments of the present application. As shown in FIG. 14, the AMP device 500 includes:
a communication unit 510, configured to receive a primary channel transmitted by a network device via frequency hopping, where a beacon frame transmitted to the AMP device is transmitted via the primary channel, or the beacon frame is transmitted via a fixed channel.

In some embodiments, the primary channel performs frequency hopping based on a first frequency hopping pattern.

In some embodiments, the first frequency hopping pattern is predefined, or is configured by the network device.

In some embodiments, the first frequency hopping pattern is used to indicate N channel indexes, where N is a frequency hopping period, and the N channel indexes are used to indicate channels that are sequentially hopped within one frequency hopping period.

In some embodiments, in each frequency hopping period, a frequency hopping pattern of the primary channel is the same, or a frequency hopping pattern of the primary channel is variable.

In some embodiments, the first frequency hopping pattern is generated based on a pseudo-noise (PN) sequence.

In some embodiments, other channels except the primary channel are transmitted via frequency hopping.

In some embodiments, the other channels and the primary channel use a same frequency hopping pattern.

In some embodiments, frequency hopping patterns used by the other channels and the primary channel have a first frequency hopping offset, and a unit of the first frequency hopping offset is a channel.

In some embodiments, the primary channel performs frequency hopping within a first channel set, and the beacon frame is transmitted on a fixed channel in the first channel set, the first channel set including all or part of all channels.

In some embodiments, on other channels in the first channel set except the fixed channel, the network device remains silent or transmits other frames except the beacon frame.

In some embodiments, the communication unit 510 is further configured to receive a first frame transmitted by the network device, where the first frame is used to indicate frequency hopping information of the primary channel, and the first frame includes at least one of the following frames: a beacon frame, an association response frame, a reassociation response frame, or a probe response frame.

In some embodiments, the first frame includes first indication information, and the first indication information is used to indicate an initial frequency point of the primary channel and/or a frequency hopping pattern of the primary channel.

In some embodiments, the first frame is further used to indicate a frequency point of a channel where the first frame is located.

In some embodiments, the communication unit 510 is further used to: receive a first channel transmitted by the network device, where the first channel is used to indicate frequency hopping information of the primary channel.

In some embodiments, the first channel is a fixed channel, or the first channel is transmitted via frequency hopping.

In some embodiments, the first channel is used to indicate a frequency hopping pattern of the primary channel or a frequency hopping offset between the frequency hopping pattern of the primary channel and a frequency hopping pattern of the first channel.

In some embodiments, the primary channel performs frequency hopping within a first channel set, and the first channel set includes part of all channels.

In some embodiments, the beacon frame includes a legacy preamble part and an AMP part, a target receiving device of the AMP part is an AMP device, and a target receiving device of the legacy preamble part is a non-AMP device.

In some embodiments, the legacy preamble part and the AMP part are both transmitted via frequency hopping.

In some embodiments, the AMP part is transmitted via frequency hopping.

In some embodiments, a frequency hopping range of the AMP part does not exceed a bandwidth of the legacy preamble part.

Optionally, in some embodiments, the communication unit mentioned above may be a communication interface or a transceiver, or may be an input/output interface of a communication chip or a system on chip. The processing unit mentioned above may be one or more processors.

It should be understood that the AMP device 500 according to the embodiments of the present application may correspond to the AMP device in the method embodiments of the present application. Other operations and/or functions of each unit in the AMP device 500 as mentioned above are respectively to implement corresponding processes of the AMP device in the methods shown in FIG. 6 to FIG. 12, which will not be repeated here for the sake of brevity.

FIG. 15 is a schematic structural diagram of a communication device 600 provided in embodiments of the present application. The communication device 600 shown in FIG. 15 includes a processor 610, and the processor 610 can call and run a computer program from a memory to implement the method in the embodiments of the present application.

Optionally, as shown in FIG. 15, the communication device 600 may further include a memory 620. The processor 610 can call and run a computer program from the memory 620 to implement the method in the embodiments of the present application.

The memory 620 may be a separate device independent of the processor 610, or may be integrated into the processor 610.

Optionally, as shown in FIG. 15, the communication device 600 may further include a transceiver 630. The processor 610 can control the transceiver 630 to communicate with other devices, and specifically, to transmit information or data to other devices, or to receive information or data transmitted by other devices.

The transceiver 630 may include a transmitter and a receiver. The transceiver 630 may further include antenna(s), and there may be one or more antennas.

Optionally, the communication device 600 may specifically be the network device of the embodiments of the present application, and the communication device 600 may implement corresponding processes implemented by the network device in each method of the embodiments of the present application, which will not be repeated here for the sake of brevity.

Optionally, the communication device 600 may specifically be the AMP device of the embodiments of the present application, and the communication device 600 may implement corresponding processes implemented by the AMP device in each method of the embodiments of the present application, which will not be repeated here for the sake of brevity.

FIG. 16 is a schematic structural diagram of a chip in embodiments of the present application. The chip 700 shown in FIG. 16 includes a processor 710, and the processor 710 can call and run a computer program from a memory to implement the method in the embodiments of the present application.

Optionally, as shown in FIG. 16, the chip 700 may further include a memory 720. The processor 710 may call and run a computer program from the memory 720 to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to obtain information or data transmitted by other devices or chips.

Optionally, the chip 700 may further include an output interface 740. The processor 710 may control the output interface 740 to communicate with other devices or chips, and specifically, to output information or data to other devices or chips.

Optionally, the chip may be applied to the network device in the embodiments of the present application, and the chip may implement corresponding processes implemented by the network device in each method of the embodiments of the present application, which will not be repeated here for the sake of brevity.

Optionally, the chip may be applied to the mobile terminal/terminal device in the embodiments of the present application, and the chip may implement corresponding processes implemented by the mobile terminal/terminal device in each method of the embodiments of the present application, which will not be repeated here for the sake of brevity.

It should be understood that the chip mentioned in the embodiments of the present application may also be called a system on chip, a system chip, a chip system, or a system-on-chip chip, etc.

FIG. 17 is a schematic block diagram of a communication system 900 provided in embodiments of the present application. As shown in FIG. 17, the communication system 900 includes an AMP device 910 and a network device 920.

The AMP device 910 may be used to implement the corresponding functions implemented by the AMP device in the above method, and the network device 920 may be used to implement the corresponding functions implemented by the network device in the above method, which will not be repeated here for the sake of brevity.

It should be understood that the processor in the embodiments of the present application may be an integrated circuit chip and have a capability of processing signals. In the implementation process, all steps in the above method embodiments can be implemented by an integrated logic circuit of hardware in the processor or instructions in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. All methods, steps and logical block diagrams disclosed in the embodiments of the present application can be implemented or performed. The general-purpose processor may be a microprocessor, or the processor may be any conventional processor. The steps of the method disclosed in combination with the embodiments of the present application may be directly embodied as being performed and implemented by a hardware decoding processor, or by using a combination of hardware and software modules in the decoding processor. The software module may be located in a mature storage medium in the art such as a random memory, a flash memory, a read-only memory, a programmable read-only memory or an electrically erasable programmable memory, a register. The storage medium is located in the memory, and the processor reads the information in the memory and implements the steps of the above methods in combination with its hardware.

It can be understood that, the memory in the embodiments of the present application may be a volatile memory or a non-volatile memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memories of the system and the method described herein are intended to include, but not limited to, these and any other suitable types of memories.

It should be understood that the above memory is exemplary but not limiting illustration, e.g., the memory in embodiments of the present application may also be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in the embodiments of the present application is intended to include, but not limited to, these memories and any other suitable types of memories.

The embodiments of the present application further provide a computer-readable storage medium for storing a computer program.

Optionally, the computer-readable storage medium may be applied to the network device in the embodiments of the present application, and the computer program causes a computer to perform the corresponding processes implemented by the network device in each method of the embodiments of the present application, which will not be repeated here for the sake of brevity.

Optionally, the computer-readable storage medium may be applied to the mobile terminal/terminal device in the embodiments of the present application, and the computer program causes a computer to perform the corresponding processes implemented by the mobile terminal/terminal device in each method of the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions cause a computer to perform the corresponding processes implemented by the network device in each method of the embodiments of the present application, which will not be repeated here for the sake of brevity.

Optionally, the computer program product may be applied to the mobile terminal/terminal device in the embodiments of the present application, and the computer program instructions cause a computer to perform the corresponding processes implemented by the mobile terminal/terminal device in each method of the embodiments of the present application, which will not be repeated here for the sake of brevity.

The embodiments of the present application further provide a computer program.

Optionally, the computer program may be applied to the network device in the embodiments of the present application. The computer program, when being executed by a computer, causes the computer to perform the corresponding processes implemented by the network device in each method of the embodiments of the present application, which will not be repeated here for the sake of brevity.

Optionally, the computer program may be applied to the mobile terminal/terminal device in the embodiments of the present application. The computer program, when being executed by a computer, causes the computer to perform the corresponding processes implemented by the mobile terminal/terminal device in each method of the embodiments of the present application, which will not be repeated here for the sake of brevity.

Those ordinary skilled in the art will realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

Those skilled in the art will clearly understand that, for convenience and brevity of the description, as for the specific working processes of the above-described system, apparatus and e unit reference may be made to the corresponding processes in the above method embodiments, and details will not be repeated here.

In several embodiments provided in the present application, it will be understood that, the disclosed systems, apparatuses/devices, and methods may be implemented through other manners. For example, the apparatus embodiments described above are merely exemplary. For example, the division of the units is only a logical functional division. In an actual implementation, there may be other division manners. For example, a plurality of units or components may be combined or integrated into another system, or some features may be ignored or not executed. In addition, the mutual coupling or direct coupling or communicative connection shown or discussed may be an indirect coupling or communicative connection through some interfaces, apparatuses or units, and may be an electrical connection, a mechanical connection, or other forms of connections.

The units illustrated as separate components may be or may not be physically separated, and the components shown as units may be or may not be physical units. That is, they may be located in one place, or may be distributed onto a plurality of network units. Some or all of the units may be selected according to actual needs, to achieve the purposes of the solutions in the embodiments.

In addition, the functional units in the embodiments of the present application may be integrated into a single processing unit, or the units may be separate physical units, or two or more units may be integrated into a single unit.

If the described functions are implemented in the form of a software functional unit and sold or used as an independent product, they may be stored in a computer-readable storage medium. Based on this understanding, the technical solutions of the present application, in essence, or part of the technical solutions that contributes to the prior art, or part of the technical solutions, may be embodied in the form of a software product. The computer software product is stored in a storage medium, and includes several instructions to cause a computer device (which may be a personal computer, a server, or a network device, etc.) to perform all or part of the steps of the methods described in the various embodiments of the present application. The storage medium mentioned above includes various types of medium capable of storing program codes, such as a USB flash drive (U disk), a mobile hard disk, a read-only memory (ROM), a random access memory (RAM), a diskette, or an optical disk.

The foregoing descriptions are merely specific implementations of the present application, but the protection scope of the present application is not limited thereto. Any skilled person in the art could readily conceive of variations or replacements within the technical scope disclosed in the present application, which shall be all included in the protection scope of the present application. Therefore, the protection scope of the present application shall be subject to the protection scope of the claims.

## Claims

1. A wireless communication method, comprising:
transmitting, by a network device, a primary channel via frequency hopping, wherein a beacon frame is transmitted via the primary channel, or the beacon frame is transmitted via a fixed channel, the beacon frame being transmitted to an ambient power (AMP) device.

2. The method according to claim 1, wherein the primary channel performs frequency hopping based on a first frequency hopping pattern.

3. The method according to claim 2, wherein the first frequency hopping pattern is predefined.

4. The method according to claim 2 or 3, wherein the first frequency hopping pattern is used to indicate N channel indexes, wherein N is a frequency hopping period, and the N channel indexes are used to indicate channels that are sequentially hopped within one frequency hopping period.

5. The method according to any one of claims 2 to 4, wherein in each frequency hopping period, a frequency hopping pattern of the primary channel is the same, or a frequency hopping pattern of the primary channel is variable.

6. The method according to any one of claims 2 to 5, wherein the first frequency hopping pattern is generated based on a pseudo-noise (PN) sequence.

7. The method according to any one of claims 1 to 6, wherein other channels except the primary channel are transmitted via frequency hopping.

8. The method according to claim 7, wherein the other channels and the primary channel use a same frequency hopping pattern.

9. The method according to claim 7, wherein frequency hopping patterns used by the other channels and the primary channel have a first frequency hopping offset, and a unit of the first frequency hopping offset is a channel.

10. The method according to any one of claims 1 to 9, wherein the primary channel performs frequency hopping within a first channel set, and the beacon frame is transmitted on a fixed channel in the first channel set, the first channel set comprising all or part of all channels.

11. The method according to claim 10, wherein on other channels in the first channel set except the fixed channel, the network device remains silent or transmits other frames except the beacon frame.

12. The method according to any one of claims 1 to 11, wherein the method further comprises:
indicating, by the network device, frequency hopping information of the primary channel via a first frame, wherein the first frame comprises at least one of: a beacon frame, an association response frame, a reassociation response frame, or a probe response frame.

13. The method according to claim 12, wherein the first frame comprises first indication information, and the first indication information is used to indicate an initial frequency point of the primary channel and/or a frequency hopping pattern of the primary channel.

14. The method according to claim 12 or 13, wherein the first frame is further used to indicate a frequency point of a channel where the first frame is located.

15. The method according to any one of claims 1 to 14, wherein the method further comprises:
indicating, by the network device, frequency hopping information of the primary channel via a first channel.

16. The method according to claim 15, wherein the first channel is a fixed channel, or the first channel is transmitted via frequency hopping.

17. The method according to claim 15, wherein the first channel is used to indicate a frequency hopping pattern of the primary channel or a frequency hopping offset between the frequency hopping pattern of the primary channel and a frequency hopping pattern of the first channel.

18. The method according to any one of claims 1 to 17, wherein the primary channel performs frequency hopping within a first channel set, and the first channel set comprises part of all channels.

19. The method according to any one of claims 1 to 18, wherein the beacon frame comprises a legacy preamble part and an AMP part, a target receiving device of the AMP part is an AMP device, and a target receiving device of the legacy preamble part is a non-AMP device.

20. The method according to claim 19, wherein the legacy preamble part and the AMP part are both transmitted via frequency hopping.

21. The method according to claim 19, wherein the AMP part is transmitted via frequency hopping.

22. The method according to claim 21, wherein a frequency hopping range of the AMP part does not exceed a bandwidth of the legacy preamble part.

23. A wireless communication method, comprising:
receiving, by an ambient power (AMP) device, a primary channel transmitted by a network device via frequency hopping, wherein a beacon frame transmitted to the AMP device is transmitted via the primary channel, or the beacon frame is transmitted via a fixed channel.

24. The method according to claim 23, wherein the primary channel performs frequency hopping based on a first frequency hopping pattern.

25. The method according to claim 24, wherein the first frequency hopping pattern is predefined, or is configured by the network device.

26. The method according to claim 24 or 25, wherein the first frequency hopping pattern is used to indicate N channel indexes, wherein N is a frequency hopping period, and the N channel indexes are used to indicate channels that are sequentially hopped within one frequency hopping period.

27. The method according to any one of claims 24 to 26, wherein in each frequency hopping period, a frequency hopping pattern of the primary channel is the same, or a frequency hopping pattern of the primary channel is variable.

28. The method according to any one of claims 24 to 27, wherein the first frequency hopping pattern is generated based on a pseudo-noise (PN) sequence.

29. The method according to any one of claims 23 to 28, wherein other channels except the primary channel are transmitted via frequency hopping.

30. The method according to claim 29, wherein the other channels and the primary channel use a same frequency hopping pattern.

31. The method according to claim 29, wherein frequency hopping patterns used by the other channels and the primary channel have a first frequency hopping offset, and a unit of the first frequency hopping offset is a channel.

32. The method according to any one of claims 23 to 31, wherein the primary channel performs frequency hopping within a first channel set, and the beacon frame is transmitted on a fixed channel in the first channel set, the first channel set comprising all or part of all channels.

33. The method according to claim 32, wherein on other channels in the first channel set except the fixed channel, the network device remains silent or transmits other frames except the beacon frame.

34. The method according to any one of claims 23 to 33, wherein the method further comprises:
receiving, by the AMP device, a first frame transmitted by the network device, wherein the first frame is used to indicate frequency hopping information of the primary channel, and the first frame comprises at least one of: a beacon frame, an association response frame, a reassociation response frame, or a probe response frame.

35. The method according to claim 34, wherein the first frame comprises first indication information, and the first indication information is used to indicate an initial frequency point of the primary channel and/or a frequency hopping pattern of the primary channel.

36. The method according to claim 34 or 35, wherein the first frame is further used to indicate a frequency point of a channel where the first frame is located.

37. The method according to any one of claims 23 to 36, wherein the method further comprises:
receiving, by the AMP device, a first channel transmitted by the network device, wherein the first channel is used to indicate frequency hopping information of the primary channel.

38. The method according to claim 37, wherein the first channel is a fixed channel, or the first channel is transmitted via frequency hopping.

39. The method according to claim 37, wherein the first channel is used to indicate a frequency hopping pattern of the primary channel or a frequency hopping offset between the frequency hopping pattern of the primary channel and a frequency hopping pattern of the first channel.

40. The method according to any one of claims 23 to 39, wherein the primary channel performs frequency hopping within a first channel set, and the first channel set comprises part of all channels.

41. The method according to any one of claims 23 to 40, wherein the beacon frame comprises a legacy preamble part and an AMP part, a target receiving device of the AMP part is an AMP device, and a target receiving device of the legacy preamble part is a non-AMP device.

42. The method according to claim 41, wherein the legacy preamble part and the AMP part are both transmitted via frequency hopping.

43. The method according to claim 41, wherein the AMP part is transmitted via frequency hopping.

44. The method according to claim 43, wherein a frequency hopping range of the AMP part does not exceed a bandwidth of the legacy preamble part.

45. A network device, comprising:
a communication unit, configured to transmit a primary channel via frequency hopping, wherein a beacon frame is transmitted via the primary channel, or the beacon frame is transmitted via a fixed channel, the beacon frame being transmitted to an ambient power (AMP) device.

46. An ambient power (AMP) device, comprising:
a communication unit, configured to receive a primary channel transmitted by a network device via frequency hopping, wherein a beacon frame transmitted to the AMP device is transmitted via the primary channel, or the beacon frame is transmitted via a fixed channel.

47. A network device, comprising a processor and a memory, wherein the memory is configured to store a computer program, and the processor is configured to call the computer program stored in the memory and run the computer program, to perform the method according to any one of claims 1 to 22.

48. An ambient power (AMP) device, comprising a processor and a memory, wherein the memory is configured to store a computer program, and the processor is configured to call the computer program stored in the memory and run the computer program, to perform the method according to any one of claims 23 to 44.

49. A chip, comprising a processor, configured to call a computer program from a memory and run the computer program, to cause a device equipped with the chip to perform the method according to any one of claims 1 to 22 or the method according to any one of claims 23 to 44.

50. A computer-readable storage medium, configured to store a computer program, wherein the computer program causes a computer to perform the method according to any one of claims 23 to 44 or the method according to any one of claims 23 to 44.

51. A computer program product, comprising computer program instructions, wherein the computer program instructions cause a computer to perform the method according to any one of claims 1 to 22 or the method according to any one of claims 23 to 44.

52. A computer program, wherein the computer program causes a computer to perform the method according to any one of claims 23 to 44 or the method according to any one of claims 23 to 44.
